# EUROPÄISCHE PATENTSCHRIFT

(11) **EP 1 551 671 B1**
(45) Veröffentlichungstag und Bekanntmachung des Hinweises auf die Patenterteilung: **20.07.2011**
(21) Anmeldenummer: 03797954.9
(22) Anmeldetag: 30.05.2003
(51) Int. Cl.: B60R 21/01

(54) **VORRICHTUNG ZUR ANSTEUERUNG EINES RÜCKHALTESYSTEMS**
DEVICE FOR CONTROLLING A RETAINING SYSTEM
DISPOSITIF DE COMMANDE D'UN SYSTEME DE RETENUE

(30) Priorität: 08.10.2002 DE 10246800
(43) Veröffentlichungstag der Anmeldung: 13.07.2005
(73) Patentinhaber: ROBERT BOSCH GMBH, 70442 Stuttgart (DE)
(72) Erfinder: THEISEN, Marc, 71634 Ludwigsburg (DE); ROELLEKE, Michael, 71229 Leonberg-Hoefinden (DE)
(86) Internationale Anmeldenummer: PCT/DE2003/001773
(87) Internationale Veröffentlichungsnummer: WO 2004/033260

(56) Entgegenhaltungen:
- US-A- 4 243 248
- US-B1- 6 199 903
- US-B1- 6 270 115
- US-B1- 6 278 924

## Beschreibung

### Stand der Technik

Die Erfindung geht aus von einem Verfahren zur Ansteuerung eines Rückhaltesystems nach der Gattung des unabhängigen Patentanspruchs.

Aus DE 199 09 538 A1 ist es bekannt, die zweite Airbagstufe in Abhängigkeit von einem Kriterium, das vom Beschleunigungssignal abgeleitet wurde, anzusteuern. Aus DE 101 09 043 A1 ist es bekannt, die zweite Airbagstufe in Abhängigkeit von zwei Kriterien, die vom. Beschleunigungssignal abgeleitet wurden, anzusteuern.

Aus US 6,199,903 ist eine Ansteuerung einer zweiten Airbagstufe bekannt, wobei nach Ansteuerung der ersten Airbagstufe eine Zeit T1 abgewartet wird, bis ein Freigabesignal für die zweite Stufe erzeugt wird. Für die Ansteuerung der zweiten Airbagstufe ist jedoch eine Ansteuerungsentscheidung notwendig, die in Abhängigkeit von der Auswertung eines Beschleunigungssignals und einer Zustandsvariablen CP erfolgt, die die Kollisionsenergie repräsentiert. Aus US 4,243,248 ist die Ansteuerung von zwei Airbagstufen bekannt, die in Abhängigkeit von der Auswertung eines Beschleunigungssignals erfolgt. Dabei werden den jeweiligen Stufen zugeordnete Schwellwerte S1 und S2 entweder durch das Beschleunigungssignal selbst oder das integrierte Beschleunigungssignal übertroffen. Der Vergleich mit dem Schwellwert S2 erfolgt mit der Verzögerungszeit δT. Aus US 6,278,924 ist es bekannt, dass ein Beschleunigungssignal in einem Single-Point-Algorithmus verarbeitet wird. Liegt eine Ansteuerungsentscheidung vor, geht diese in einen zweiten Algorithmus, bei dem eine Verknüpfung mit der Aufprallgeschwindigkeit erfolgt. Diese Verknüpfung wird dann einem biomechanischen Algorithmus zugeführt.

### Vorteile der Erfindung

Das erfindungsgemäße Verfahren zur Ansteuerung eines Rückhaltesystems mit den Merkmalen des unabhängigen Patentanspruchs hat demgegenüber Vorteil. Es ist bekannt dass die Ansteuerung der zweiten Airbagstufe aufgrund der Aufprallgeschwindigkeit, die mit einer Precrashsensorik ermittelt wird, und der Auslösezeit der ersten Airbagstufe erfolgt. Dies hat den Vorteil, dass die Auslösezeit für die zweite Airbagstufe exakt bestimmt werden kann.

Durch die in den abhängigen Ansprüchen aufgeführten Maßnahmen und Weiterbildungen sind vorteilhafte Verbesserungen des im unabhängigen Patentanspruch angegebenen Verfahrens zur Ansteuerung eines Rückhaltesystems möglich.

Es ist, bekannt dass das wenigstens eine Kriterium, das durch eine abgeleitete Größe vom Beschleunigungssignal ermittelt wird, die Auslösezeit für die erste Airbagstufe ist. Damit wird dann die zweite Airbagstufe in Abhängigkeit von der Auslösezeit für die erste Airbagstufe und der Aufprallgeschwindigkeit bestimmt. Damit berechnet sich die Auslösung der zweiten Stufe aus derjenigen der ersten Stufe plus der zu berechnenden Verzögerung. Um diese Verzögerung zu erfindungsgemäß ermitteln, lassen sich in Abhängigkeit von der Auslösezeit der ersten Stufe und der Aufprallgeschwindigkeit zumindest drei Klasser definieren. Die Klassen beschreiben die unterschiedlichen Verzögerungen. Aus dieser Methode ergibt sich der Vorteil, dass nur diejenige Schwellwertfunktion eingestellt werden muss, die zur Auslösung der ersten Airbagstufe notwendig ist. Daraus resultiert eine Reduktion des Entwicklungsaufwandes. Außerdem wird Rechenleistung eingespart, da nach Zündung der ersten Stufe keine weitere Signalverarbeitung zur Zündung der zweiten Stufe notwendig ist. Diese Rechenleistung kann dann zur Zündung anderer Rückhaltemittel bereitgestellt werden. Ein wesentlicher Vorteil liegt darin, dass die zweite Airbagstufe präzise in Bezug auf die erste Airbagstufe gezündet werden kann. D.h., es kann sowohl die beispielsweise für die Zündtechnik notwendige minimale Verzögerung als auch die für den wirksamen Schutz des Insassen maximale Verzögerung präzise eingehalten werden, da keine zwei voneinander unabhängige Schwellwertfunktionen mehr benutzt werden. Weiterhin ist es von Vorteil, dass es bei einer Aufprallgeschwindigkeit unterhalb einer bestimmten Grenze, beispielsweise 29 km/h die zweite Airbagstufe nie angesteuert wird. Somit ist es schließlich möglich, die für die amerikanische Gesetzgebung (FMVSS 208) notwendige genaue Unterscheidung zwischen der Zündung der ersten und der zweiten Stufe zu erfüllen.

Die untere Grenze ist ein empirischer Grenzwert, der auf eine geringere Crashschwere deutet, so dass die Rückhaltekraft durch die zweite Airbagstufe hier nicht notwendig ist. Letztlich ist es auch von Vorteil, dass die Vorrichtung wenigstens drei Klassen definiert, die in Abhängigkeit von der Aufprallgeschwindigkeit und der Auslösezeit für die erste Airbagstufe definiert werden.

### Zeichnung

Ausführungsbeispiele der Erfindung sind in der Zeichnung dargestellt und werden in der nachfolgenden Beschreibung näher erläutert.

Es zeigen Figur 1 ein Blockschaltbild der erfindungsgemäßen Vorrichtung, Figur 2 ein erstes Ablaufdiagramm, Figur 3 ein zweites Ablaufdiagramm, Figur 4 ein drittes Ablaufdiagramm, Figur 5 ein viertes Ablaufdiagramm und Figur 6 eine Klasseneinteilung.

### Beschreibung

Ziel der erfindungsgemäßen Vorrichtung ist es, die zweite Airbagstufe präzise auszulösen. Dafür wird die Auslösezeit für die zweite Airbagstufe in Abhängigkeit von einem Kriterium, das vom Beschleunigungssignal abgeleitet wurde und der Aufprallgeschwindigkeit, die von einem Precrashsensor ermittelt wurde, bestimmt. Als Kriterium wird hier insbesondere die Auslösezeit für die erste Airbagstufe verwendet.

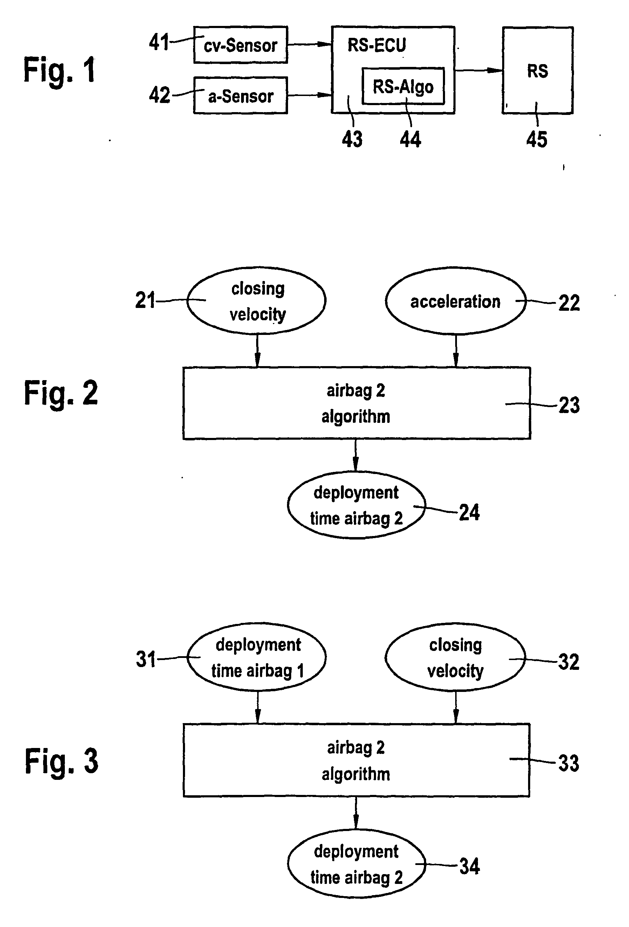

Figur 1 zeigt in einem Blockschaltbild die erfindungsgemäße Vorrichtung. Ein Beschleunigungssensor 42 ist an einen ersten Dateneingang eines Steuergeräts 43 angeschlossen. Ein Precrashsensor 41 zur Ermittlung der Aufprallgeschwindigkeit ist an einen zweiten Dateneingang des Steuergeräts 43 angeschlossen. Im Steuergerät 43 läuft auf einem Prozessor 44 der Algorithmus für ein Rückhaltesystem 45 ab, das einen zweistufigen Airbag hier ansteuert Über einen-Datenausgang ist das Steuergerät 43 mit dem Rückhaltesystem 45, hier beispielsweise mit einem zweistufigen Airbag, verbunden. Es ist jedoch klar, dass in einem Fahrzeug wenigstens zwei zweistufige Airbags im Rückhaltesystem 45 vorhanden sind, einen für den Fahrer und einen für den Beifahrer. Weitere Rückhaltemittel wie Gurtstraffer oder ein- oder mehrstufige Airbags sind hier der Einfachheit halber nicht dargestellt.

Der Beschleunigungssensor 42 kann im Steuergerät 43 angeordnet sein oder auch ausgelagert als ein sogenannter Satellit bzw. peripherer Beschleunigungssensor wie beispielsweise ein Up-front-Sensor oder ein Seitenaufprallsensor. Der Precrashsensor 41 ist üblicherweise ausgelagert vom Steuergerät 43 und kann als Radar- oder Ultraschall- oder Videosensor zur Umfeldüberwachung ausgebildet sein. Die Sensoren 41 und' 42 können mit einer Signalverarbeitungseinheit ausgestattet sein und daher bereits eine Vorverarbeitung der ermittelten Messwerte durchführen. Die Verbindung im Steuergerät 43 kann über einen Bus realisiert sein oder über einzelne Zweidrahtleitungen, die entweder uni- oder bidirektional ausgebildet sind. Im Allegemeinen ist lediglich eine. unidirektionale Verbindung vom Sensor 41 oder 42 zum Steuergerät 43 notwendig. Für einen Test der einzelnen Sensoren kann jedoch auch eine bidirektionale Verbindung von Nutzen sein. Es können mehr als die hier dargestellten Sensoren 41 und 42 an das Steuergerät 43 angeschlossen sein.

Figur 2 zeigt dabei die erste Methode. Bei der ersten Methode basiert die Berechnung des Auslösezeitpunkts der zweiten Stufe 14 auf dem Auslösezeitpunkt der ersten Stufe 11 und dem weiteren Verlauf des Beschleunigungssignals 12. Wenn beispielsweise die erste Stufe sehr früh ausgelöst wird, wird die zweite Stufe mit minimaler Verzögerung gezündet, weil man in diesem Fall von einem sehr harten Crash ausgehen muss. Wird die erste Stufe erst später gezündet, dann muss man das Beschleunigungssignal weiter beobachten, um zu entscheiden, ob es sich um einen solch schweren Crash handelt, dass die zweite Stufe gezündet werden muss.

Figur 3 zeigt eine zweite Methode. Bei der zweiten Variante wird sowohl das Beschleunigungssignal 22, als auch die Aufprallgeschwindigkeit 21 ausgewertet. Dabei wird das Beschleunigungssignal einer Signalverarbeitung unterzogen. Dies kann beispielsweise eine einfache oder zweifache Integration sein. Die so erhaltene Größe wird mit einer Schwelle verglichen, die sowohl zeit-, als auch geschwindigkeitsabhängig sein kann. Wenn die Schwelle überschritten wird, wird die zweite Airbag-Stufe ausgelöst.

Figur 4 zeigt ein Ablaufdiagramm des Verfahrens, das auf der erfindungsgemäßen Vorrichtung abläuft. Mittels eines Signals vom Beschleunigungssensor 42 wurde bereits die Auslösezeit für die erste Airbagstufe 31 durch den Prozessor 44 berechnet. Zusätzlich hat nun der Precrashsensor 41 die Aufprallgeschwindigkeit 32 bestimmt. Diese beiden Parameter gehen in den Auslösealgorithmus 33 ein, der durch den Prozessor 44 gerechnet wird. Als Ergebnis liegt die Auslösezeit für die zweite Airbagstufe vor. Diese ist mit dem Bezugszeichen 34 bezeichnet.

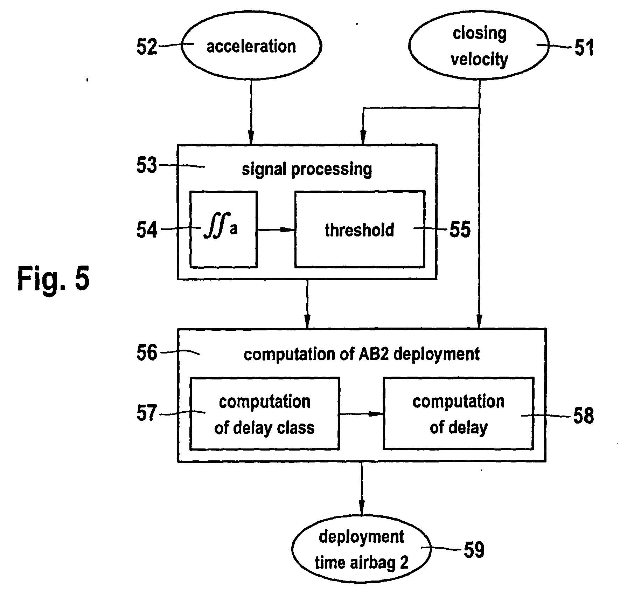

Wie in Figur 5 dargestellt, wird neben der Aufprallgeschwindigkeit 51 das von dem Beschleunigungssensor 42 bestimmte Beschleunigungssignal 52 als ein Eingangsparameter in den Algorithmus verwendet. Dieser Algorithmus wird auf dem Steuergerät 43 abgearbeitet. Aus diesen beiden Parametern wird zunächst in einem hier nicht näher behandelten Algorithmus mittels einer Signalverarbeitung 53 die Auslöseentscheidung des Airbags in Bezug auf die erste Stufe ermittelt. Dies kann beispielsweise entweder direkt aus dem Beschleunigungssignal oder über das durch einfache Integration berechnete Geschwindigkeitssignal bzw. über das durch zweifache ' Integration ermittelte Vorverlagerungssignal 54 durch einen Schwellwertvergleich 55 geschehen. Dabei wird auch die Aufprallgeschwindigkeit 51 des Precrash-Sensors 41 berücksichtigt. Im zweiten Schritt 56 wird dann aus der Auslösezeit für den Airbag in Bezug auf die erste Stufe und der Aufprallgeschwindigkeit die Auslöseentscheidung für den Airbag in Bezug auf die zweite Stufe berechnet. Dies erfolgt wiederum in zwei Schritten. Zuerst wird dazu die Verzögerungsklasse 57 und damit dann im zweiten Schritt die Verzögerung selbst 58 ermittelt. Die Definition einer Verzögerungsklasse wird in Figur 5 erläutert. Hier ist die Aufprallgeschwindigkeit 60 über der Auslösezeit des Airbags erster Stufe 69 aufgetragen. Ist die Aufprallgeschwindigkeit beispielsweise kleiner als 29 km/h 67, dann darf der Airbag zweiter Stufe nie gezündet werden. Dies ist dann der Fall 68. Liegt die Geschwindigkeit über dieser Grenze, muss die zweite Stufe mit einer gewissen Verzögerung ausgelöst werden. Dies findet sich in der Klasse 65. Dies trifft hier beispielsweise für das Wertepaar 64 zu. Die Verzögerung kann dabei entweder fest oder von der Crashschwere abhängig sein.

Wenn beispielsweise die Aufprallgeschwindigkeit hoch ist, z. B. etwa 56 km/h beträgt, und die Auslösezeit für den Airbag der ersten Stufe sehr gering ist, z. B. 8 ms, dann kann von einem sehr schweren Crash ausgegangen werden - dies betrifft das Wertepaar 62 - und die zweite Stufe muss mit einer geringen Verzögerung gezündet werden. Dies betrifft dann alle Wertepaare für die Klasse 61. Bei einem langsameren Crash, z. B. 40 km/h, mit einer späteren Auslösezeit des Airbags in Bezug auf die erste Stufe, z. B. 45 ms - dies betrifft den oben angesprochenen Fall des Wertepaares 64 - muss der Airbag mit einer längeren Verzögerung ausgelöst werden. Crashsituationen, bei denen die Auslösung der zweiten Stufe nach der gleichen Regel verzögert wird, werden zu Verzögerungsklassen zusammengefasst.

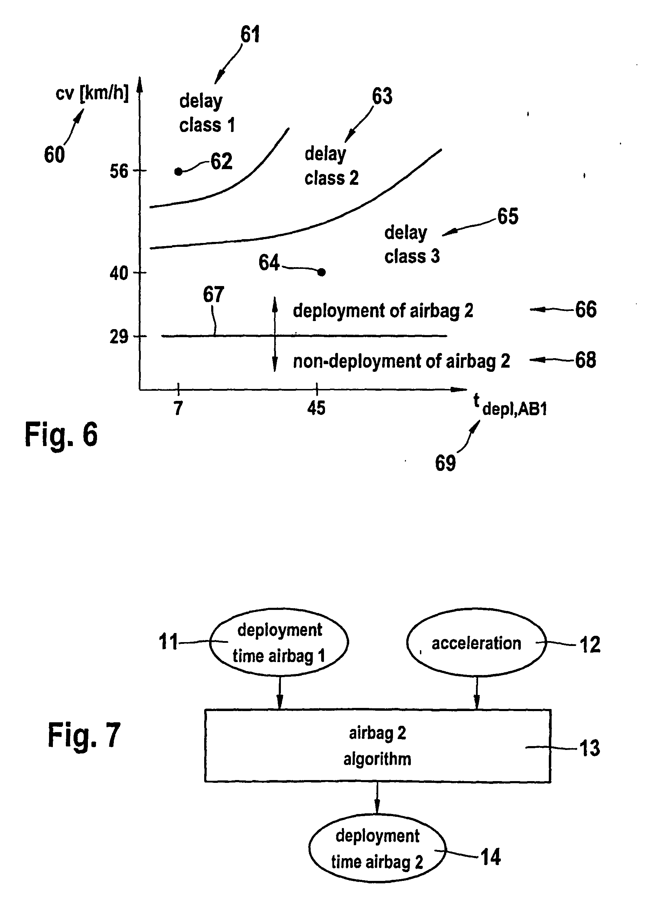

Drei solcher Verzögerungsklassen, 61, 63, 65, sind in der Figur 6 dargestellt. Nach der gleichen Regel verzögert zu werden kann aber beispielsweise auch bedeuten, dass die Verzögerungszeit linear mit der Auslösezeit der ersten Stufe oder mit der Aufprallgeschwindigkeit zunimmt. Die Trennlinien zwischen den einzelnen Verzögerungsklassen können beispielsweise über eine mathematische Funktion oder über einen durch Stützstellen definierten Polygonzug festgelegt werden. Die Anzahl der Verzögerungsklassen kann beliebig sein, wenigstens aber drei, so.

Mit diesen Verfahren ist es also möglich, unter Kenntnis der Aufprallgeschwindigkeit und der Auslösezeit der ersten Stufe des Airbags die Verzögerung bis zur Auslösung der zweiten Airbagstufe präzise zu ermitteln.

## Patentansprüche

1. Verfahren zur Ansteuerung eines Rückhaltesystems (45), wobei das Rückhaltesystem (45) bei einem Unfall in Abhängigkeit von wenigstens einem von einem Beschleunigungssignal (22, 52) abgeleiteten Kriterium angesteuert wird, wobei die eine zweite Stufe eines Airbags in Abhängigkeit von einer Verknüpfung des wenigstens einen Kriteriums und einer Aufprallgeschwindigkeit (21, 32, 51), die von einer Precrashsensorik (41) erhalten wird, angesteuert wird, **dadurch gekennzeichnet, dass** das wenigstens eine Kriterium eine erste Auslösezeit (31) für die erste Airbagstufe ist, und daß in Abhängigkeit von der ersten Auslösezeit einer ersten Stufe des Airbags (31) und der Aufprallgeschwindigkeit (21, 32, 51) wenigstens drei Klassen (61, 63, 65) definiert, wobei eine jeweilige Klasse (61, 63, 65) eine zweite Auslösezeit (24, 34, 59) für die zweite Airbagstufe festlegt.

2. Verfahren nach Anspruch 1, **dadurch gekennzeichnet, dass** bei einer Aufprallgeschwindigkeit unterhalb einer zuvor festgelegten Grenze (67) die zweite Airbagstufe nicht angesteuert wird.

## Claims

1. Method for actuating a restraining system (45), wherein in the event of an accident the restraining system (45) is actuated as a function of at least one criterion derived from an acceleration signal (22, 52), wherein the one second stage of an airbag is actuated as a function of logic linking of the at least one criterion and of an impact speed (21, 32, 51), which is obtained by a pre-crash sensor system (41), **characterized in that** the at least one criterion is a first triggering time (31) for the first airbag stage, and **in that** at least three classes (61, 63, 65) are defined as a function of the first triggering time of the first stage of the airbag (31) and of the impact speed (21, 32, 51), wherein a respective class (61, 63, 65) defines a second triggering time (24, 34, 59) for the second airbag stage.

2. Method according to Claim 1, **characterized in that** in the event of an impact speed below a previously defined limit (67) the second airbag slate is not actuated.

## Revendications

1. Procédé d'activation d'un système de retenue (45), dans lequel le système de retenue (45) est activé en cas d'accident en fonction d'au moins un critère déduit d'un signal d'accélération (22, 52), un deuxième étage d'un coussin gonflable de sécurité étant activé en fonction d'une association entre le ou les critères et d'une vitesse de collision (21, 32, 51) obtenue en provenance d'un ensemble (41) de détecteurs d'avant-collision,
**caractérisé en ce que**
le ou les critères sont un premier instant de déclenchement (31) du premier étage du coussin gonflable de sécurité,
**en ce qu'**au moins trois classes (61, 63, 65) sont définies en fonction du premier instant de déclenchement du premier étage du coussin gonflable de sécurité (31) et de la vitesse de collision (21, 32, 51) et
**en ce que** chaque classe (61, 63, 65) définit un deuxième instant de déclenchement (24, 34, 59) du deuxième étage du coussin gonflable de sécurité.

2. Procédé selon la revendication 1, **caractérisé en ce que** le deuxième étage du coussin gonflable de sécurité n'est pas déclenché si la vitesse de collision est inférieure à une limite (67) préalablement définie.
